# EUROPEAN PATENT APPLICATION

(11) **EP 4 757 382 A1**
(43) Date of publication of application: **10.06.2026**
(21) Application number: 23947128.7
(22) Date of filing: 02.08.2023
(51) Int. Cl.: H04W 24/02

(54) **METHOD FOR DETERMINING QUALITY OF SERVICE OF SENSING SERVICE, AND TERMINAL DEVICE AND NETWORK DEVICE**

(71) Applicant: GUANGDONG OPPO MOBILE TELECOMMUNICATIONS CORP., LTD., Dongguan, Guangdong 523860 (CN)
(72) Inventor: WANG, Yaxin, Dongguan, Guangdong 523860 (CN); GUO, Yali, Dongguan, Guangdong 523860 (CN)
(74) Representative: RGTH
(86) International application number: PCT/CN2023/110852
(87) International publication number: WO 2025/025180

(57) **Abstract**

The present application relates to a method for determining the quality of service (QoS) of a sensing service, and a terminal device and a network device. A method for determining the QoS of a sensing task comprises: a terminal device sending a first message, wherein the first message carries sensing parameter information; and the terminal device receiving QoS information corresponding to the sensing parameter information. By means of the present application, the requirement of a sensing service can be met, thereby ensuring normal execution of the sensing service.

## Description

### TECHNICAL FIELD

The present disclosure relates to the field of communication, and more particularly, to a method for determining quality of service (QoS) of a sensing service, a terminal device, and a network device.

### BACKGROUND

For a sensing service, because sensing data that needs to be transmitted has a large volume and strict requirements, it is necessary to determine the corresponding QoS parameter requirements (e.g., transmission rate, maximum delay, packet error rate, etc.) according to the requirements of the sensing service, and configure and execute the QoS parameter requirements through session management and other methods. However, in the related art, sensing services are not classified, and corresponding QoS parameters cannot be configured for different types of sensing services, resulting in it being difficult for the terminal to meet the requirements of different types of sensing services when transmitting sensing data.

### SUMMARY

Embodiments of the present disclosure provide a method for determining QoS of a sensing service, a terminal device, and a network device.

The embodiments of the present disclosure provide a method for determining sensing QoS, including:
transmitting, by a terminal device, a first message, where the first message carries sensing parameter information; and
receiving, by the terminal device, QoS information corresponding to the sensing parameter information.

The embodiments of the present disclosure provide a method for determining QoS of a sensing task, including:
receiving, by a first network device, a first message from a terminal device, where the first message carries sensing parameter information; and
transmitting, by the first network device, a second message to a second network device, where the second message carries the sensing parameter information.

The embodiments of the present disclosure provide a method for determining QoS of a sensing task, including:
receiving, by a second network device, a second message, where the second message carries sensing parameter information;
determining, by the second network device, QoS information corresponding to the sensing parameter information, according to the parameter information and a mapping relationship between the sensing parameter information and the QoS information; and
transmitting, by the second network device, a third message, where the third message carries the QoS information corresponding to the sensing parameter information.

The embodiments of the present disclosure provide a method for determining QoS of a sensing task, including:
receiving, by a terminal device, a fourth message, where the fourth message carries QoS information corresponding to each sensing parameter information of one or more sensing parameter information.

The embodiments of the present disclosure provide a method for determining QoS of a sensing task, including:
receiving, by a first network device, a fifth message from a second network device, where the fifth message carries QoS information corresponding to each sensing parameter information of one or more sensing parameter information; and
transmitting, by the first network device, a fourth message to a terminal device, where the fourth message carries the QoS information corresponding to each sensing parameter information of the one or more sensing parameter information.

The embodiments of the present disclosure provide a method for determining QoS of a sensing task, including:
transmitting, by a second network device, a fifth message, where the fifth message carries QoS information corresponding to each sensing parameter information of one or more sensing parameter information.

The embodiments of the present disclosure provide a terminal device, including:
a first transmitting module, configured to transmit a first message, where the first message carries sensing parameter information; and
a first receiving module, configured to receive QoS information corresponding to the sensing parameter information.

The embodiments of the present disclosure provide a first network device, including:
a second receiving module, configured to receive a first message from a terminal device, where the first message carries sensing parameter information; and
a second transmitting module, configured to transmit a second message to a second network device, where the second message carries the sensing parameter information.

The embodiments of the present disclosure provide a second network device, including:
a third receiving module, configured to receive a second message, where the second message carries sensing parameter information;
a first determining module, configured to determine QoS information corresponding to the sensing parameter information, according to the parameter information and a mapping relationship between the sensing parameter information and the QoS information; and
a third transmitting module, configured to transmit a third message, where the third message carries the QoS information corresponding to the sensing parameter information.

The embodiments of the present disclosure provide a terminal device, including:
a fourth receiving module, configured to receive a fourth message, where the fourth message carries QoS information corresponding to each sensing parameter information of one or more sensing parameter information.

The embodiments of the present disclosure provide a first network device, including:
a fifth receiving module, configured to receive a fifth message from a second network device, where the fifth message carries QoS information corresponding to each sensing parameter information of one or more sensing parameter information; and
a fifth transmitting module, configured to transmit a fourth message to a terminal device, where the fourth message carries the QoS information corresponding to each sensing parameter information of the one or more sensing parameter information.

The embodiments of the present disclosure provide a second network device, including:
a sixth transmitting module, configured to transmit a fifth message, where the fifth message carries QoS information corresponding to each sensing parameter information of one or more sensing parameter information.

The embodiments of the present disclosure further provide a communication device, including a processor, a memory, and a transceiver. The memory is configured to store a computer program, and the processor is configured to invoke and run the computer program stored in the memory, and control the transceiver, to cause the device to perform the above-mentioned method for determining QoS of a sensing task.

The embodiments of the present disclosure provide a chip, configured to implement the above-mentioned method for determining QoS of a sensing task.

Specifically, the chip includes: a processor, configured to invoke a computer program from a memory and run the computer program, to cause a device equipped with the chip to perform the above-mentioned method for determining QoS of a sensing task.

The embodiments of the present disclosure provide a computer-readable storage medium, configured to store a computer program, where the computer program, when executed by a device, causes the device to perform the above-mentioned method for determining QoS of a sensing task.

The embodiments of the present disclosure provide a computer program product, including computer program instructions, where the computer program instructions cause a computer to perform the above-mentioned method for determining QoS of a sensing task.

The embodiments of the present disclosure provide a computer program, which, when executed on a computer, causes the computer to perform the above-mentioned method for determining QoS of a sensing task.

The embodiments of the present disclosure propose a method for determining QoS of a sensing service, where a terminal device transmits sensing parameter information to a network device and receives QoS information corresponding to the sensing parameter information from the network device, thereby configuring a QoS-related parameter corresponding to the sensing parameter information, which may ensure that the UE can meet the requirements of the sensing service when transmitting sensing data, thereby ensuring the normal execution of the sensing service. The embodiments of the present disclosure further propose another method for determining QoS of a sensing service, where a terminal device receives QoS information corresponding to multiple sensing parameter information from a network device, thereby configuring QoS-related parameters corresponding to the multiple sensing parameter information; subsequently, when the UE transmits sensing data, it may determine the corresponding QoS according to the sensing parameter information of the sensing service, and perform data packet mapping based on the QoS, to ensure that the UE can meet the requirements of the sensing service when transmitting sensing data, thereby ensuring the normal execution of the sensing service.

### BRIEF DESCRIPTION OF THE DRAWINGS

FIG. 1 is a schematic diagram of an application scenario according to the embodiments of the present disclosure.
FIG. 2 is a schematic diagram of a 5G network system architecture.
FIG. 3 is a schematic diagram of an integrated sensing and communication system structure.
FIG. 4 is a schematic flowchart of a method 400 for determining QoS of a sensing task according to an embodiment of the present disclosure.
FIG. 5 is a schematic flowchart of a method 500 for determining QoS of a sensing task according to an embodiment of the present disclosure.
FIG. 6 is a schematic flowchart of an implementation for determining QoS of a sensing task according to the present disclosure.
FIG. 7 is a schematic flowchart of a method 700 for determining QoS of a sensing task according to an embodiment of the present disclosure.
FIG. 8 is a schematic flowchart of an implementation for determining QoS of a sensing task according to the present disclosure.
FIG. 9 is a schematic block diagram of a terminal device 900 according to an embodiment of the present disclosure.
FIG. 10 is a schematic block diagram of a terminal device 1000 according to an embodiment of the present disclosure.
FIG. 11 is a schematic block diagram of a first network device 1100 according to an embodiment of the present disclosure.
FIG. 12 is a schematic block diagram of a second network device 1200 according to an embodiment of the present disclosure.
FIG. 13 is a schematic block diagram of a terminal device 1300 according to an embodiment of the present disclosure.
FIG. 14 is a schematic block diagram of a terminal device 1400 according to an embodiment of the present disclosure.
FIG. 15 is a schematic block diagram of a first network device 1500 according to an embodiment of the present disclosure.
FIG. 16 is a schematic block diagram of a second network device 1600 according to an embodiment of the present disclosure.
FIG. 17 is a schematic structural diagram of a communication device 1700 according to the embodiments of the present disclosure.
FIG. 18 is a schematic block diagram of a chip 1800 according to the embodiments of the present disclosure.

### DETAILED DESCRIPTION

Technical solutions in the embodiments of the present disclosure will be described below in conjunction with drawings in the embodiments of the present disclosure.

The technical solutions of the embodiments of the present disclosure may be applied to various communication systems, such as: a long term evolution (LTE) system, an advanced long term evolution (LTE-A) system, a new radio (NR) system, an evolution system of the NR system, an LTE-based access to unlicensed spectrum (LTE-U) system, an NR-based access to unlicensed spectrum (NR-U) system, a non-terrestrial communication network (Non-Terrestrial Networks, NTN) system, a universal mobile telecommunication system (UMTS), a wireless local area networks (WLAN), wireless fidelity (WiFi), a fifth generation (5th-Generation, 5G) communication system or other communication systems.

Traditional communication systems support a limited number of connections, which is also easy to implement. However, with the development of the communication technology, mobile communication systems will not only support traditional communications, but also support, for example, device to device (D2D) communication, machine to machine (M2M) communication, machine type communication (MTC), vehicle to vehicle (V2V) communication, or vehicle to everything (V2X) communication, etc. The embodiments of the present disclosure may also be applied to these communication systems as well.

In an implementation, the communication system in the embodiments of the present disclosure may be applied to a carrier aggregation (CA) scenario, a dual connectivity (DC) scenario, and may also be applied to a standalone (SA) network deployment scenario.

In an implementation, the communication system in the embodiments of the present disclosure may be applied to an unlicensed spectrum, where the unlicensed spectrum may also be considered as a shared spectrum. Alternatively, the communication system in the embodiments of the present disclosure may be applied to a licensed spectrum, where the licensed spectrum may be considered as an unshared spectrum.

In the embodiments of the present disclosure, each embodiment is described in conjunction with a network device and a terminal device, where the terminal device may be referred to as a user equipment (UE), an access terminal, a user unit, a user station, a mobile station, a mobile platform, a remote station, a remote terminal, a mobile device, a user terminal, a terminal, a wireless communication device, a user agent, a user apparatus, or the like.

The terminal device may be a station (STAION, ST) in the WLAN, or may be a cellular phone, a cordless phone, a session initiation protocol (Session Initiation Protocol, SIP) phone, a wireless local loop (Wireless Local Loop, WLL) station, a personal digital processing (Personal Digital Assistant, PDA) device, a handheld device with a wireless communication function, a computing device or other processing devices connected to a wireless modem, an in-vehicle device, a wearable device, a terminal device in a next generation communication system (e.g., an NR network), a terminal device in a future evolved public land mobile network (Public Land Mobile Network, PLMN) network, or the like.

In the embodiments of the present disclosure, the terminal device may be deployed on land, including indoor or outdoor, handheld, wearable, or in-vehicle; the terminal device may also be deployed on water (e.g., on a steamship, etc.); the terminal device may also be deployed in air (e.g., on an airplane, on a balloon, or on a satellite, etc.).

In the embodiments of the present disclosure, the terminal device may be a mobile phone, a pad, a computer with a wireless transceiver function, a virtual reality (VR) terminal device, an augmented reality (AR) terminal device, a wireless terminal device in industrial control, a wireless terminal device in self-driving, a wireless terminal device in remote medical, a wireless terminal device in smart grid, a wireless terminal device in transportation safety, a wireless terminal device in smart city, or a wireless terminal device in smart home, or the like.

As an example but not a limitation, in the embodiments of the present disclosure, the terminal device may also be a wearable device. The wearable device may be referred to as a wearable smart device, which is a general term for wearable devices developed by performing the intellectualized design on daily wear by applying wearable technologies, such as glasses, gloves, watches, clothing and shoes, etc. The wearable device is a portable device that is worn directly on a body, or integrated into the clothes or accessories of users. The wearable device is not only a hardware device, but also implements powerful functions by software support as well as data interaction or cloud interaction. Generalized wearable smart devices include devices, that are fully functional, large in size and may implement all or part of functions without relying on smart phones, such as smart watches or smart glasses; as well as devices, that only focus on a certain type of application function and need to be used in conjunction with other devices (e.g., a smart phone), such as various smart bracelets and smart jewelry that monitor physical signs, or the like.

In the embodiments of the present disclosure, the network device may be a device used for communicating with a mobile device, and the network device may be an access point (AP) in a WLAN, an evolutional base station (Evolutional Node B, eNB or eNodeB) in an LTE, or a relay station or an access point, or an in-vehicle device, a wearable device, and a network device (gNB) in an NR network, or a network device in a future evolved PLMN network, or a network device in an NTN network, or the like.

As an example but not a limitation, in the embodiments of the present disclosure, the network device may have mobile characteristics. For example, the network device may be a device which is mobile. Optionally, the network device may be a satellite, or a balloon station. For example, the satellite may be a low earth orbit (LEO) satellite, a medium earth orbit (MEO) satellite, a geostationary earth orbit (GEO) satellite, or a high elliptical orbit (HEO) satellite, etc. Optionally, the network device may also be a base station deployed on land, water, or other places.

In the embodiments of the present disclosure, the network device may provide a service for a cell, and the terminal device communicates with the network device through a transmission resource (e.g., a frequency-domain resource, or in other words, a spectrum resource) used by the cell. The cell may be a cell corresponding to the network device (e.g., a base station), and the cell may belong to a macro base station, or may belong to a base station corresponding to a small cell. The small cell here may include: a metro cell, a micro cell, a pico cell, or a femto cell, or the like. These small cells have characteristics of small coverage ranges and low transmission power, which are applicable for providing a data transmission service with a high speed.

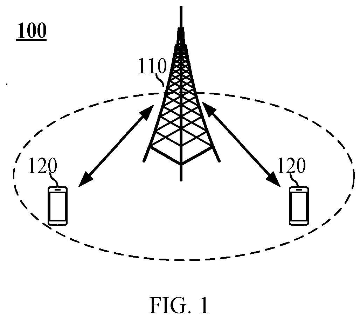

FIG. 1 exemplarily shows a communication system 100. The communication system includes a network device 110 and two terminal devices 120. In an implementation, the communication system 100 may include multiple network devices 110, and the coverage range of each network device 110 may include another number of terminal devices 120, which is not limited in the embodiments of the present disclosure.

In an implementation, the communication system 100 may further include other network entities such as a mobility management entity (MME), and an access and mobility management function (AMF), which is not limited in the embodiment of the present disclosure.

The network device may also include an access network device and a core network device. That is, the wireless communication system further includes multiple core networks for communicating with the access network device. The access network device may be an evolutional base station (evolutional node B, which may be referred to as an eNB or e-NodeB briefly), a macro base station, a micro base station (also referred to as a "small base station"), a pico base station, an access point (AP), a transmission point (TP) or a new generation base station (new generation Node B, gNodeB), in a long-term evolution (LTE) system, a next-generation (mobile communication system) (next radio, NR) system or an authorized auxiliary access long-term evolution (LAA-LTE) system, etc.

It should be understood that, in the embodiments of the present disclosure, a device with a communication function in the network/system may be referred to as a communication device. Taking the communication system shown in FIG. 1 as an example, the communication device may include a network device with a communication function and a terminal device with a communication function. The network device and the terminal device may be the specific devices in the embodiments of the present disclosure, which will not be repeated here. The communication device may further include other devices in the communication system, such as a network controller, a mobility management entity, and other network entities, which are not limited in the embodiments of the present disclosure.

It should be understood that the terms "system" and "network" are often used interchangeably herein. The term "and/or" herein is only an association relationship to describe associated objects, indicating that there may be three kinds of relationships, and for example, "A and/or B" may represent three cases where: A exists alone, both A and B exist, and B exists alone. In addition, a character "/" herein generally indicates that the associated objects before and after this character are in an "or" relationship.

It should be understood that, "indicate/indicated/indicating/indication" mentioned in the embodiments of the present disclosure may mean a direct indication, an indirect indication, or may mean that there is an association relationship. For example, A indicating B may mean that A directly indicates B, and for example, B may be acquired by A; alternatively, A indicating B may mean that A indirectly indicates B, and for example, A indicates C, and B may be acquired by C; alternatively, A indicating B may mean that there is an association relationship between A and B.

In the description of the embodiments of the present disclosure, the term "correspond / corresponding / correspondence" may mean that there is a direct correspondence or an indirect correspondence between the two, or may mean that there is an association relationship between the two, or may mean a relationship of indicating and being indicated, or a relationship of configuring and being configured, etc.

To facilitate understanding of the technical solutions of the embodiments of the present disclosure, the related technologies of the embodiments of the present disclosure are described below, and the following related technologies, as optional solutions, may be arbitrarily combined with the technical solutions of the embodiments of the present disclosure, and they all fall within the protection scope of the embodiments of the present disclosure.

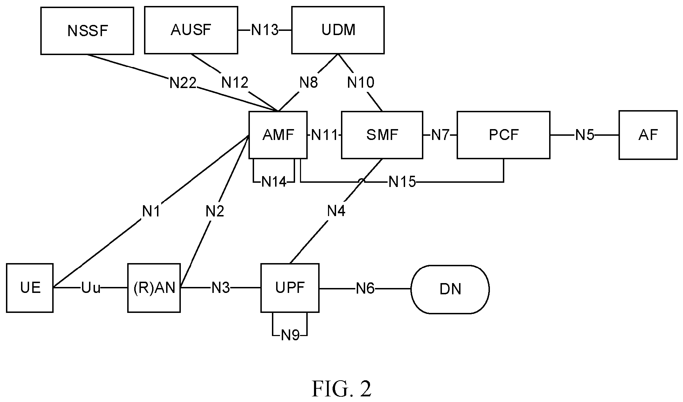

The 5G network system architecture diagram is shown in FIG. 2. The UE establishes an access stratum connection with an access network (AN) via a Uu interface, to exchange access stratum messages and wireless data transmissions, and the UE establishes a non-access stratum (Non Access Stratum, NAS) connection with an AMF via an N1 interface, to exchange NAS messages. The AMF is a mobility management function in the core network, and a Session Management Function (SMF) is a session management function in the core network, and in addition to the mobility management for the UE, the AMF is also responsible for forwarding session management-related messages between the UE and the SMF. A policy control function (PCF) is a policy management function in the core network, and responsible for formulating the related policies for the UE, such as mobility management, session management, and charging, etc. A User Plane Function (UPF) is a user plane function in the core network, and transmits data with an external data network (DN) via an N6 interface, and transmits data with the AN via an N3 interface.

The radio electromagnetic wave signals used by the cellular network may not only be used for wireless data transmissions and communications, but also have environmental sensing capabilities, such as user motion or gesture recognition, breathing monitoring, terminal movement speed measurement, environmental imaging, weather monitoring, etc. Therefore, the cellular network may be considered not only for communications and data transmissions, but also for acquiring the sensing information.

In related technologies, the sensing function is supported in the 3rd generation partnership project (3GPP) network by adding a sensing function network element (Sensing Function) and the corresponding procedure. In a case where an application transmits a sensing request for a target UE to a core network of the 3GPP network, the core network selects a correct access network device or an auxiliary UE via a sensing control network element or an AMF, and triggers a capability of performing sensing-related wireless measurement, starts measurement of sensing information and generates a sensing result.

The main wireless sensing scenarios for the integrated sensing and communication are as follows:
1. a base station echo sensing link (single gNB sensing): a base station transmits a sensing signal and receives an echo signal;
2. an inter-base station sensing link (gNB-gNB sensing): a base station B receives a sensing signal transmitted from a base station A;
3. an air interface uplink sensing link (UE-gNB uplink sensing): a base station receives a sensing signal transmitted from a terminal;
4. an air interface downlink sensing link (UE-gNB downlink sensing): a terminal receives a sensing signal transmitted from a base station;
5. a terminal echo sensing link (single UE sensing): a terminal transmits a sensing signal and receives an echo signal; and
6. an inter-terminal sensing link (UE-UE sensing): a terminal B receives a sensing signal transmitted from terminal A.

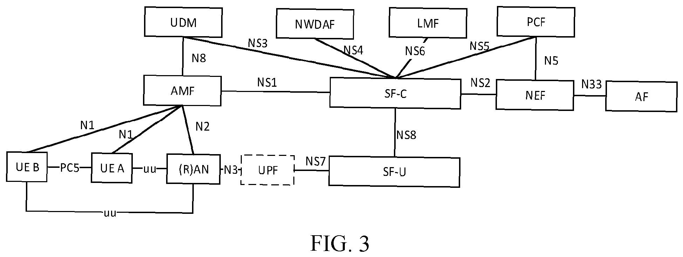

In an early stage of B5G (Beyond 5G) integrated sensing and communication, consideration is given to reusing existing air interface signals as much as possible to perform sensing behaviors, without introducing too much air interface enhancement; in addition, by considering complexity of the full-duplex implementation, collaborative sensing between terminals and/or base stations is a prioritized direction. The sensing methods 3, 4, 5, and 6 may require the UE to report a large amount of sensing data to the sensing network element in the core network or acquire auxiliary data from the network element of the core network. FIG. 3 shows a structural schematic diagram of an integrated sensing and communication system.

Currently, considering the large amount of data interacted between the UE and the sensing network element, the UE may complete the necessary interaction of the sensing service with the sensing network element through the user plane data transmission. The UE may transmit sensing data to the SF-U (a user plane part of the sensing network element, which may also be jointly set up with a location management function network element (Location Management Function, LMF), which is not limited thereto, and FIG. 3 is only an exemplary architecture) via the UPF by establishing a special protocol data unit (PDU) session. The SF represents a sensing network element or a sensing function network element, and may also be other names. The SF-U represents a user plane part of the sensing network element, or a user plane part of the sensing function network element, and may also be other names. In order to meet quality requirements (e.g., precision and accuracy, etc.) of the sensing service, it is necessary to configure appropriate QoS parameters (e.g., a transmission rate, a maximum delay, a packet error rate, etc.) for the user plane connection of the UE, and how to configure user plane information for a specific sensing task/session to meet the requirements of the user plane transmission of the sensing task is a problem that needs to be solved.

Specifically, the requirement parameters of the sensing service may include the following Table 1:

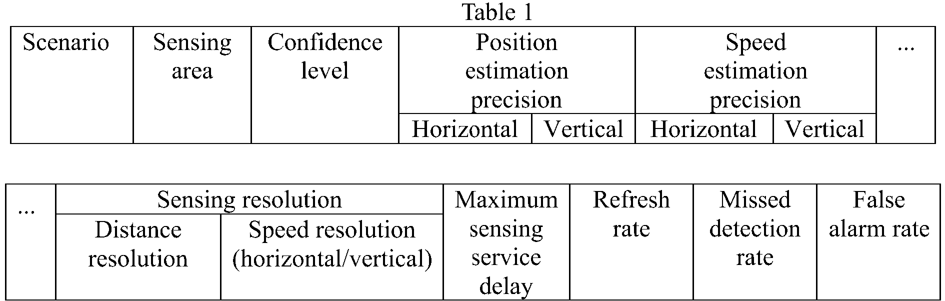

It may include a sensing scenario (e.g., intrusion monitoring, breathing monitoring, motion capture, autonomous driving, etc.), a sensing area (e.g., indoor or outdoor, area size, etc.), a confidence level (reliability of the sensing result), position estimation precision (including horizontal and vertical position precision (in units such as meters/decimeters/centimeters, etc.)), speed estimation precision (including horizontal and vertical speed precision), sensing resolution (e.g., range resolution and speed resolution, etc.), a maximum sensing service delay, a refresh rate (e.g., 10 refreshes per second, etc.), a missed alarm (detection) rate, a false alarm rate, etc.

Currently, QoS parameters mainly include an allocation and retention priority (ARP), a guaranteed flow bit rate (GFBR) including uplink or downlink, a maximum flow bit rate (MFBR) including uplink or downlink, a maximum packet loss rate including uplink or downlink, and parameters related to a 5G QoS identifier (5QI), etc. The parameters related to the 5QI includes default priority level, resource type (e.g., guaranteed or non-guaranteed bit rate type, GBR or Non-GBR), packet delay budget (PDB), packet error rate (PER), maximum data burst volume (MDBV), etc., and with respect to the above-mentioned related parameters, the 5QI facilitates a templated configuration for the specific service type by setting a 5QI sequence number and a set of corresponding default values.

For a sensing service, because sensing data that needs to be transmitted has a large volume and strict requirements, it is necessary to determine the corresponding QoS parameter requirements (e.g., transmission rate, maximum delay, packet error rate, etc.) according to the requirements (e.g., precision, accuracy, etc.) of the sensing service, and configure and execute the QoS parameter requirements through session management and other methods. In addition, since there are many scenarios and types of the sensing service, the required QoS level needs to be determined according to the scenario and the type of the sensing service, and the UE maps the sensing service data flow to the corresponding QoS flow.

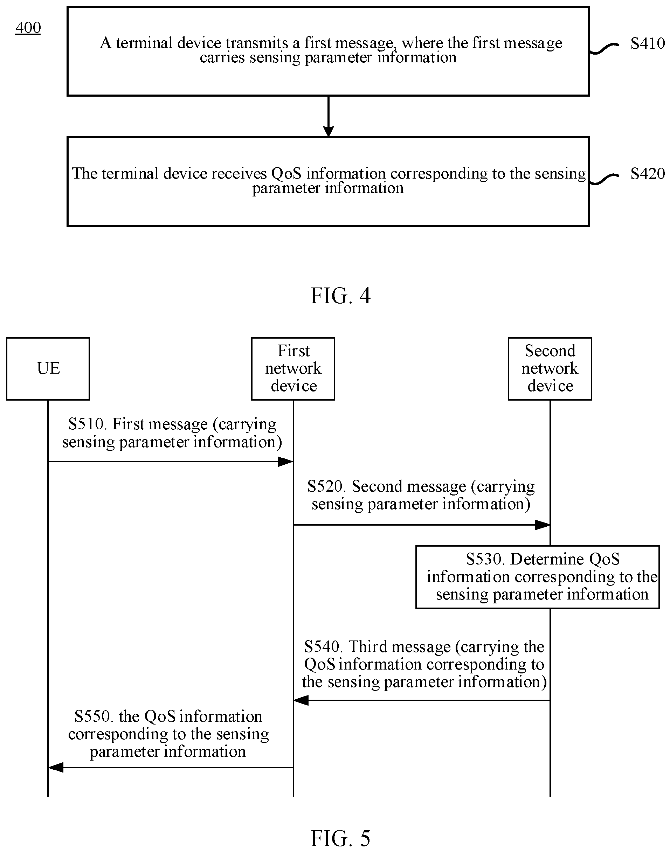

FIG. 4 is a schematic flowchart of a method 400 for determining QoS of a sensing task according to an embodiment of the present disclosure. This method may optionally be applied to any system shown in FIG. 1 to FIG. 3, but is not limited thereto. The method includes at least some of the following contents.

In S410, a terminal device transmits a first message, where the first message carries sensing parameter information.

In S420, the terminal device receives QoS information corresponding to the sensing parameter information.

After the terminal device receives the QoS information corresponding to the sensing parameter information, it may perform data packet mapping based on the QoS information corresponding to the sensing parameter information.

In some implementations, the sensing parameter information may refer to parameters representing sensing service classification, for example, the sensing parameter information includes at least one of a sensing type, a sensing scenario, a sensing service level and a sensing area.

In some examples, the terminal device may transmit the first message carrying the sensing parameter information to a first network device (such as an SMF), and afterwards, the first network device acquires QoS information corresponding to the sensing parameter information from a second network device (such as a PCF), and transmits the acquired QoS information corresponding to the sensing parameter information to the terminal device, so that the terminal device performa data packet mapping based on the QoS information.

The first message may include a session establishment request or a session modification request.

The manner in which the first message carries the sensing parameter information may include:
the first message carrying identification information corresponding to a sensing service data flow and the sensing parameter information; or
the first message carrying identification information corresponding to a sensing service data flow, and the identification information corresponding to the sensing service data flow includes the sensing parameter information.

That is, the sensing parameter information may be transmitted as an item in the first message, or may be transmitted as an item in the identification information corresponding to the service data flow.

For example, the identification information corresponding to the service data flow may be a packet filter, and the packet filter may include user plane address information of an SF. The first message may carry the packet filter and the sensing parameter information; or, the first message may carry the packet filter, and the packet filter includes not only the user plane address information of the SF but also the sensing parameter information.

The embodiments of the present disclosure classify sensing services (different sensing parameter information corresponds to different classifications) and configures corresponding QoS information (e.g., including QoS parameters) for each classification, and this configuration may be stored on the network side. When the terminal device reports the sensing data, it transmits the sensing parameter information corresponding to the sensing service to the network device, and receives the QoS information corresponding to the sensing parameter information from the network side, so that data packet mapping may be performed based on the QoS information. The configuration of QoS-related parameters is realized, which ensures the QoS requirements of the sensing service data transmitted on the user plane, thereby ensuring that the UE can meet the requirements of the sensing service when transmitting sensing data via the user plane, and then ensuring the normal execution of the sensing service.

The following describes examples of interaction between a terminal device, a first network device, and a second network device. In the following examples, the first network device may include an SMF, and the second network device may include a PCF; the first network device is mainly used to establish a session with the terminal device, obtain QoS information corresponding to the sensing parameter information from the second network device, and provide the QoS information to the terminal device; the second network device is mainly used to pre-configure QoS information corresponding to each sensing parameter information of multiple sensing parameter information; or acquire the QoS information corresponding to each sensing parameter information of multiple sensing parameter information from other network elements such as an application function (AF), a network exposure function (NEF), and a network data analysis function (NWDAF), etc., and upon receiving a request from the first network device, provide the first network device with the requested QoS information corresponding to the sensing parameter information. In other examples, the first network device and the second network device may not be limited to the aforementioned network elements, as long as they have the aforementioned functions. FIG. 5 is a schematic flowchart of a method 500 for determining QoS of a sensing task according to an embodiment of the present disclosure. This method may optionally be applied to any system shown in FIG. 1 to FIG. 3, but is not limited thereto. The method includes at least some of the following contents.

In S510, a terminal device transmits a first message to a first network device, where the first message carries sensing parameter information.

The sensing parameter information may include at least one of a sensing type, a sensing scenario, a sensing service level, and a sensing area.

The first message may include a session establishment request or a session modification request.

The first message may carry identification information corresponding to a sensing service data flow and the sensing parameter information; or, the first message may carry identification information corresponding to a sensing service data flow, and the identification information corresponding to the sensing service data flow includes the sensing parameter information.

Accordingly, the first network device receives the first message from the terminal device. The first network device reads the sensing parameter information from the first message; or, the first network device reads the sensing parameter information from the identification information corresponding to the sensing service data flow carried in the first message.

In S520, the first network device transmits a second message to a second network device, where the second message carries the sensing parameter information. Accordingly, the second network device receives the second message.

In an example, the second message may include a policy request message; the first network device requests the second network device to authorize new QoS, through the policy request message.

The second message may carry the identification information corresponding to the sensing service data flow and the sensing parameter information; or, the second message may carry the identification information corresponding to the sensing service data flow, and the identification information corresponding to the sensing service data flow includes the sensing parameter information. For example, the identification information corresponding to the sensing service data flow carried in the second message may include a packet filter, and the packet filter may include user plane address information of an SF. The second message may carry the packet filter and the sensing parameter information; or, the second message may carry the packet filter, and the packet filter includes not only the user plane address information of the SF but also the sensing parameter information.

In S530, the second network device determines QoS information corresponding to the sensing parameter information carried in the second message, according to the sensing parameter information carried in the second message and a pre-configured mapping relationship between the sensing parameter information and the QoS information.

In S540, the second network device transmits a third message to the first network device, where the third message carries the QoS information corresponding to the sensing parameter information.

In an example, the third message may include a policy request response. For example, the policy request response carries a policy and charging control (PCC) rule, and the PCC rule includes the QoS information corresponding to the sensing parameter information.

For example, the PCC rule may include the identification information corresponding to the sensing service data flow and the QoS information corresponding to the sensing parameter information; or, the PCC rule may include the identification information corresponding to the sensing service data flow and corresponding QoS information, where the identification information corresponding to the sensing service data flow includes the sensing parameter information. The identification information corresponding to the sensing service data flow may further include user plane address information of the SF.

That is, the sensing parameter information may be transmitted as an item of the identification information corresponding to the sensing service data flow, or the sensing parameter information may also be transmitted as indication information corresponding to the PCC rule.

For example, the identification information corresponding to the sensing service data flow may be a service data flow template, and the service data flow template may include user plane address information of the SF. The PCC rule may include the service data flow template and the QoS information corresponding to the sensing parameter information; or, the PCC rule may include the service data flow template, and the service data flow template includes the sensing parameter information in addition to the user plane address information of the SF.

In S550, the first network device transmits the QoS information corresponding to the sensing parameter information to the terminal device.

For example, the first network device transmits a QoS rule to the UE, and the QoS rule may include the identification information corresponding to the sensing service data flow and the sensing parameter information, and also include QoS information corresponding to the identification information and the sensing parameter information; or, the QoS rule includes the identification information corresponding to the sensing service data flow and corresponding QoS information, where the identification information corresponding to the sensing service data flow includes the sensing parameter information.

That is, the sensing parameter information may be transmitted as an item of the identification information corresponding to the sensing service data flow, or the sensing parameter information may also be transmitted as indication information corresponding to the QoS rule.

For example, the identification information corresponding to the sensing service data flow may be a packet filter set. The QoS rule may include the packet filter set and the sensing parameter information, and further include QoS information corresponding to the packet filter set and the sensing parameter information; or, the QoS rule may include the packet filter set and corresponding QoS information, and the packet filter set includes the sensing parameter information.

Afterwards, the terminal device may perform data packet mapping based on the QoS information corresponding to the sensing parameter information, thereby ensuring that the UE can meet the requirements of the sensing service when transmitting sensing data via the user plane, and then ensuring the normal execution of the sensing service.

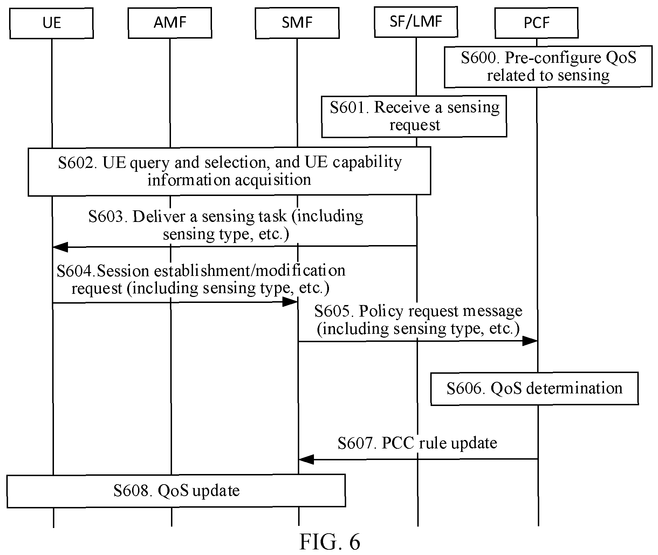

FIG. 6 is a schematic flowchart of an implementation for determining QoS of a sensing task according to the present disclosure, and the method may optionally be applied to any system shown in FIG. 1 to FIG. 3, but is not limited thereto. In this embodiment, the first network device is specifically an SMF and the second network device is specifically a PCF, for an introduction. QoS-related information related to sensing is pre-configured at the PCF, for example, a mapping relationship between sensing parameter information and QoS information is pre-configured and stored. After an SF or LMF receives a sensing request and selects a corresponding UE, it transmits user plane information (e.g., Internet Protocol (IP) address information, Fully Qualified Domain Name (FQDN) information, etc.) used for sensing data interaction to the UE, and when the UE initiates a PDU session establishment/modification request based on the user plane information, it carries related information corresponding to the sensing. Afterwards, the PCF receives the requested session and completes a QoS configuration corresponding to the user plane connection of the sensing task. As shown in FIG. 6, this embodiment includes at least some of the following contents.

In S600, the PCF pre-configures QoS information related to sensing parameter information; or, the PCF acquires QoS information corresponding to each sensing parameter information of multiple sensing parameter information from other network elements such as AF/NEF/NWDAF, etc.

For example, the mapping relationship between the sensing parameter information and the QoS information is pre-stored in the PCF, or the mapping relationship between the sensing parameter information and the QoS information is acquired from other network elements such as AF/NEF/NWDAF, etc.

Here, the sensing parameter information may include parameters such as a sensing type, a sensing scenario, a sensing service level, and a sensing area, etc., which represent the classification of the sensing service.

QoS information may include parameters such as a 5QI, a maximum flow bit rate (MFBR), a packet delay budget (PDB), and a maximum data burst volume (MDBV), etc.

In S601, the SF or LMF receives a sensing request, which includes sensing task/service/session information and may further include requirement information of the sensing service, and the requirement information of the sensing service may include the sensing parameter information of the sensing service.

For example, the SF receives a sensing request from an AMF, a mobile local centre gateway (Gateway Mobile Location Centre, GMLC), a network exposure function network element (Network Exposure Function, NEF), an application function network element (Application Function, AF), etc.

The sensing task/service/session information may include sensing target information, such as a target area, a target UE, a target object feature, etc.

The requirement information of the sensing service may include at least one of:
(1) a requested sensing mode (e.g., UE sensing, base station sensing, UE-base station collaborative sensing, etc.);
(2) a sensing service type (also referred to as a sensing scenario, such as object detection and tracking, environmental monitoring, motion monitoring, etc.);
(3) a sensing service level (different sensing scenarios or use cases may have the corresponding level divisions);
(4) a sensing area (e.g., indoor or outdoor, an area size, a sensing target type, etc.);
(5) a confidence level (reliability of a sensing result);
(6) position estimation precision (including horizontal position precision and/or vertical position precision (e.g., units of meters/decimeters/centimeters));
(7) speed estimation precision (including horizontal speed precision and vertical speed precision);
(8) sensing resolution (e.g., resolution and speed resolution);
(9) a maximum sensing service delay;
(10) a refresh rate (e.g., a number of refreshes per second);
(11) a missed alarm rate; and
(12) a false alarm rate.

The above-mentioned requirement information of the sensing service is not exhaustive, and in other implementations of the present disclosure, other information for limiting the requirement of the sensing service may also be included.

In S602, the SF or LMF discovers the corresponding UE device according to the sensing target information, and specifically, the SF or LMF may discover the corresponding UE device by querying other network elements (e.g., an AMF, a unified data management network element (Unified Data Management, UDM), a unified data repository (UDR), etc.), or discover the corresponding UE device by querying local information. The SF determines a UE that is to perform the sensing task/service, or determines a UE that is to join the sensing session, according to the UE device discovered by querying, and the sensing capability information of the UE device, and the requirement information of the sensing service, etc.

In S603, the SF or LMF delivers a sensing task to the UE determined in step S602, which includes one or more items of the requirement information in step S601, such as the sensing mode, the sensing service type, the sensing area, etc.

In S604, after receiving the sensing requirement, the UE initiates a session establishment/modification request to an SMF, which carries the sensing parameter information. The sensing parameter information may specifically include parameters representing sensing service classification, such as a sensing type, a sensing scenario, a sensing service level, and a sensing area, etc. The session establishment/modification request may also carry identification information corresponding to the sensing service data flow (such as a packet filter); the identification information corresponding to the sensing service data flow (such as the packet filter) includes user plane address information of a target SF, etc.

Alternatively, the sensing parameter information may also be transmitted as an item of the identification information corresponding to the sensing service data flow. That is, the session establishment/modification request transmitted from the UE carries the identification information corresponding to the sensing service data flow (such as the packet filter); the identification information corresponding to the sensing service data flow (such as the packet filter) includes the user plane address information of the target SF and also includes the sensing parameter information.

In S605, the SMF transmits a policy request message to a PCF, to request the PCF to authorize new QoS. The policy request message carries the sensing parameter information and may further carry the identification information corresponding to the sensing service data flow (such as the packet filter), and the identification information corresponding to the sensing service data flow (such as the packet filter) includes the user plane address information of the target SF, etc.

Alternatively, the sensing parameter information may also be transmitted as an item of the identification information corresponding to the sensing service data flow. That is, the policy request message carries the identification information corresponding to the sensing service data flow (such as the packet filter); the identification information corresponding to the sensing service data flow (such as the packet filter) includes the user plane address information of the target SF, and also includes the sensing parameter information.

In S606, the PCF determines QoS information corresponding to the sensing parameter information according to the sensing parameter information and the pre-configured mapping relationship, and generates a policy and charging control rule (PCC rule) corresponding to the sensing service flow.

In S607, the PCF delivers the updated PCC rule to the SMF. For example, the PCF transmits a policy request response to the SMF, where the policy request response carries a PCC rule, and the PCC rule includes the QoS information corresponding to the sensing parameter information.

Specifically, the PCC rule may include identification information corresponding to the sensing service data flow and the QoS information corresponding to the sensing parameter information; or, the PCC rule may include identification information corresponding to the sensing service data flow and corresponding QoS information, where the identification information corresponding to the sensing service data flow includes the sensing parameter information. The identification information corresponding to the sensing service data flow may also include the user plane address information of the SF.

That is, the sensing parameter information may be transmitted as an item of the identification information corresponding to the sensing service data flow, or the sensing parameter information may also be transmitted as indication information corresponding to the PCC rule.

For example, the identification information corresponding to the sensing service data flow may be a service data flow template, and the service data flow template may include the user plane address information of the SF. The PCC rule may include the service data flow template and the QoS information corresponding to the sensing parameter information; or, the PCC rule may include the service data flow template, and the service data flow template includes the sensing parameter information in addition to the user plane address information of the SF.

In S608, the UE and SMF, etc., perform QoS updating. For example, the SMF transmits the QoS information corresponding to the sensing parameter information to the terminal device.

For example, the SMF transmits a QoS rule to the UE, and the QoS rule may include the identification information corresponding to the sensing service data flow and the sensing parameter information, and also include QoS information corresponding to the identification information and the sensing parameter information; or, the QoS rule includes the identification information corresponding to the sensing service data flow and corresponding QoS information, where the identification information corresponding to the sensing service data flow includes the sensing parameter information.

That is, the sensing parameter information may be transmitted as an item of the identification information corresponding to the sensing service data flow, or the sensing parameter information may also be transmitted as indication information corresponding to the QoS rule.

For example, the identification information corresponding to the sensing service data flow may be a packet filter set. The QoS rule may include the packet filter set and the sensing parameter information, and also include the QoS information corresponding to the packet filter set and the sensing parameter information; or, the QoS rule may include the packet filter set and corresponding QoS information, and the packet filter set includes the sensing parameter information.

Subsequently, the terminal device may perform data packet mapping based on the QoS information corresponding to the sensing parameter information.

This embodiment classifies sensing services and pre-configures corresponding QoS parameters for each classification at the PCF, and when the UE initiates a session establishment/modification-related request to the SMF and the SMF initiates a session establishment/modification-related request to the PCF, the sensing parameter information is carried, and the PCF acquires the corresponding QoS information and implements the configuration of QoS-related parameters, thereby ensuring the QoS requirements for the transmission of the sensing service data on the user plane, which may ensure that the UE can meet the requirements of the sensing service when transmitting sensing data through the user plane, thereby ensuring the normal execution of the sensing service.

In the above methods and specific implementations for determining the QoS of the sensing task, the terminal device requests the corresponding QoS information for a specific sensing service. The following introduces another method for determining QoS of a sensing task. In this method, when the terminal device requests session establishment/modification, and the PCF, in a case of determining that this session is used to transmit sensing data, transmits QoS information of all possible sensing service classifications to the terminal device, and the terminal device determines the corresponding QoS information according to the sensing service classification (such as according to the sensing parameter information), and then performs data packet mapping based on the QoS information.

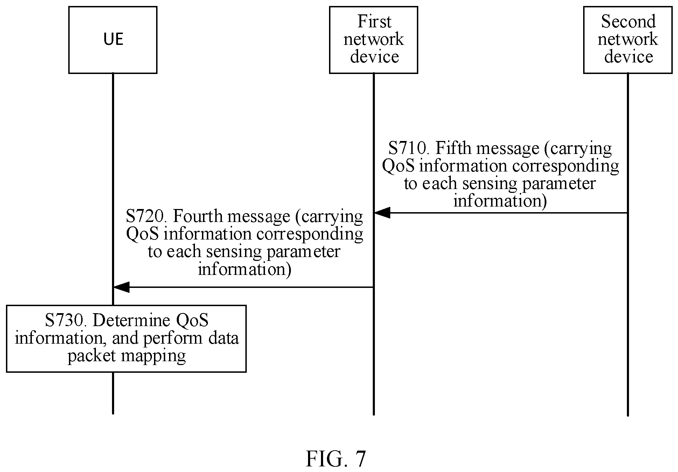

FIG. 7 is a schematic flowchart of a method 700 for determining QoS of a sensing task according to an embodiment of the present disclosure. In the following examples, the first network device may include an SMF, and the second network device may include a PCF; the first network device is mainly used to establish a session with the terminal device, acquire QoS information corresponding to multiple sensing parameter information from the second network device, and provide the acquired QoS information corresponding to the multiple sensing parameter information to the terminal device; the second network device is mainly used to pre-configure QoS information corresponding to each sensing parameter information of multiple sensing parameter information, or acquire QoS information corresponding to each sensing parameter information of multiple sensing parameter information from other network elements such as AF/NEF/NWDAF, etc., and upon receiving a request from the first network device, provide the first network device with the pre-configured QoS information corresponding to each sensing parameter information of the multiple sensing parameter information. The terminal device, after receiving the QoS information corresponding to each sensing parameter information of the multiple sensing parameter information, determines the QoS information corresponding to the sensing parameter information of the current sensing service, and performs data packet mapping based on the QoS information. In other examples, the first network device and the second network device may not be limited to the aforementioned network elements, as long as they have the aforementioned functions. This method may optionally be applied to any system shown in FIG. 1 to FIG. 3, but is not limited thereto. The method includes at least some of the following contents.

In S710, the second network device transmits a fifth message to the first network device, where the fifth message carries QoS information corresponding to each sensing parameter information of one or more sensing parameter information.

The second network device pre-stores a mapping relationship between the one or more sensing parameter information and QoS information.

In some implementations, the sensing parameter information includes at least one of a sensing type, a sensing scenario, a sensing service level, and a sensing area.

In some implementations, the fifth message may include a policy request response.

In an example, the fifth message may include a policy request response.

In some implementations, the fifth message may carry one or more PCC rules, and each PCC rule includes QoS information corresponding to one sensing parameter information.

For example, the PCC rule may include identification information corresponding to a sensing service data flow and QoS information corresponding to the sensing parameter information; or, the PCC rule may include identification information corresponding to a sensing service data flow and corresponding QoS information, where the identification information corresponding to the sensing service data flow includes the sensing parameter information. The identification information corresponding to the sensing service data flow may also include user plane address information of an SF.

That is, the sensing parameter information may be transmitted as an item of the identification information corresponding to the sensing service data flow, or the sensing parameter information may also be transmitted as indication information corresponding to the PCC rule.

For example, the identification information corresponding to the sensing service data flow may be a service data flow template, and the service data flow template may include user plane address information of the SF. The PCC rule may include the service data flow template and the QoS information corresponding to the sensing parameter information; or, the PCC rule may include the service data flow template, and the service data flow template includes the sensing parameter information in addition to the user plane address information of the SF.

Correspondingly, the first network device receives the fifth message from the second network device, and obtains the QoS information corresponding to each sensing parameter information of the one or more sensing parameter information from the fifth message.

In S720, the first network device transmits a fourth message to the terminal device, where the fourth message may carry one or more QoS rules, and each QoS rule includes QoS information corresponding to one sensing parameter information.

In some implementations, the fourth message includes a session establishment response or a session modification response.

For example, the fourth message carries one or more QoS rules, and the QoS rules may include the identification information corresponding to the sensing service data flow and the sensing parameter information, and also include QoS information corresponding to the identification information and the sensing parameter information; or, the QoS rules include the identification information corresponding to the sensing service data flow and corresponding QoS information, where the identification information corresponding to the sensing service data flow includes the sensing parameter information.

That is, the sensing parameter information may be transmitted as an item of the identification information corresponding to the sensing service data flow, or the sensing parameter information may also be transmitted as indication information corresponding to the QoS rule.

For example, the identification information corresponding to the sensing service data flow may be a packet filter set. The QoS rule may include the packet filter set and the sensing parameter information, and further include QoS information corresponding to the packet filter set and the sensing parameter information; or, the QoS rule may include the packet filter set and corresponding QoS information, and the packet filter set includes the sensing parameter information.

Correspondingly, the terminal device receives the fourth information and obtains the QoS information corresponding to each sensing parameter information of the one or more sensing parameter information from the fourth information.

In S730, the terminal device determines QoS information corresponding to the sensing parameter information of the sensing service, according to the sensing parameter information of the sensing service, and the QoS information corresponding to each sensing parameter information of the one or more sensing parameter information obtained in step S720; and the terminal device performs data packet mapping based on the QoS information corresponding to the sensing parameter information. This ensures that when the UE transmits sensing data via the user plane, it can meet the requirements of various sensing services, thereby ensuring the normal execution of various sensing services.

In this solution, when the UE transmits a session establishment/modification request, it does not need to carry information related to the sensing service to be carried out, instead, the PCF directly delivers the QoS information applicable to each classification, and then, the UE performs mapping according to the determined sensing service. Compared with the first method for determining the QoS of the sensing service mentioned above, the determination of the QoS of multiple sensing services may be supported by a single configuration, thereby reducing the number of signaling interactions.

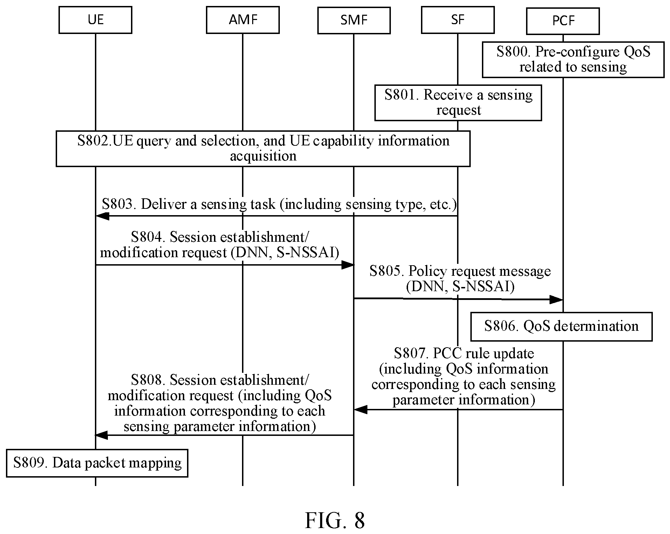

FIG. 8 is a schematic flowchart of an implementation for determining QoS of a sensing task according to the present disclosure, and this method may optionally be applied to any system shown in FIG. 1 to FIG. 3, but is not limited thereto. In this embodiment, the first network device is specifically an SMF and the second network device is specifically a PCF, for an introduction. QoS-related information related to sensing is pre-configured at the PCF, for example, a mapping relationship between sensing parameter information and QoS information is pre-configured and stored. After an SF or LMF receives a sensing request and selects a corresponding UE, it transmits user plane information (e.g., IP address information, FQDN information, etc.) used for sensing data interaction to the UE, and the UE initiates a PDU session establishment/modification request according to the user plane information and acquires the QoS information corresponding to each sensing service classification (corresponding to sensing parameter information) from the network device; and then, the UE may determine QoS information corresponding to the sensing parameter information of the current sensing service, according to the sensing parameter information of the current sensing service, and the QoS information corresponding to each sensing service classification (corresponding to sensing parameter information), and perform data packet mapping based on the QoS information. As shown in FIG. 8, this embodiment includes at least some of the following contents.

S800 to S803 are the same as the above steps S600 to S603 and will not be repeated here.

In S804, the UE, after receiving the sensing requirement, initiates a session establishment/modification request to the SMF, which carries the identification information corresponding to the sensing service data flow (such as a packet filter), and also carries a data network name (DNN) and/or single network slice selection assistance information (S-NSSAI) corresponding to the sensing service, etc. The identification information corresponding to the sensing service data flow (such as the packet filter) includes user plane address information of the target SF.

In S805, the SMF transmits a policy request message to the PCF, to request the PCF to authorize new QoS. The policy request message may carry the DNN and/or S-NSSAI information corresponding to the sensing service, as well as the identification information corresponding to the sensing service data flow (such as the packet filter), and the identification information corresponding to the sensing service data flow (such as the packet filter) includes the user plane address information of the target SF, etc.

In S806, the PCF can identify that the service is a sensing service according to the DNN and/or S-NSSAI information carried in the policy request message. The PCC rule corresponding to the sensing service flow is determined according to the pre-stored mapping relationship between various sensing parameter information and QoS information.

In S807, the PCF delivers the updated PCC rule to the SMF. For example, the PCF transmits a policy request response to the SMF, where the policy request response carries the PCC rule, and the PCC rule includes QoS information corresponding to each sensing parameter information.

Specifically, the policy request response carries the identification information corresponding to the sensing service data flow and one or more PCC rules, and each PCC rule includes QoS information corresponding to one sensing parameter information.

For example, the PCC rule may include identification information corresponding to the sensing service data flow and the QoS information corresponding to the sensing parameter information; or, the PCC rule may include identification information corresponding to the sensing service data flow and corresponding QoS information, where the identification information corresponding to the sensing service data flow includes the sensing parameter information. The identification information corresponding to the sensing service data flow may also include the user plane address information of the SF.

That is, the sensing parameter information may be transmitted as an item of the identification information corresponding to the sensing service data flow, or the sensing parameter information may also be transmitted as indication information corresponding to the PCC rule.

For example, the identification information corresponding to the sensing service data flow may be a service data flow template, and the service data flow template may include user plane address information of the SF. The PCC rule may include the service data flow template and the QoS information corresponding to the sensing parameter information; or, the PCC rule may include the service data flow template, and the service data flow template includes the sensing parameter information in addition to the user plane address information of the SF.

In S808, the SMF, after receiving the PCC rule delivered by the PCF, generates a QoS rule used by the UE according to the PCC rule, and delivers it to the UE. For example, the SMF transmits a session establishment response or a session modification response to the UE, and the session establishment response or the session modification response may carry one or more QoS rules, and each QoS rule includes QoS information corresponding to one sensing parameter information.

For example, the QoS rules may include the identification information corresponding to the sensing service data flow and the sensing parameter information, and also include QoS information corresponding to the identification information and the sensing parameter information; or, the QoS rules include the identification information corresponding to the sensing service data flow and corresponding QoS information, where the identification information corresponding to the sensing service data flow includes the sensing parameter information.

That is, the sensing parameter information may be transmitted as an item of the identification information corresponding to the sensing service data flow, or the sensing parameter information may also be transmitted as indication information corresponding to the QoS rule.

For example, the identification information corresponding to the sensing service data flow may be a packet filter set. The QoS rule may include the packet filter set and the sensing parameter information, and further include QoS information corresponding to the packet filter set and the sensing parameter information; or, the QoS rule may include the packet filter set and corresponding QoS information, and the packet filter set includes the sensing parameter information.

In S809, the UE receives the corresponding QoS rule delivered by the SMF, determines QoS information corresponding to the sensing parameter information of the current sensing service, according to the QoS information corresponding to each sensing parameter information contained in the QoS rule in conjunction with the sensing parameter information of the current sensing service, and performs data packet mapping based on the QoS information.

In this implementation, in the case where the UE transmits the session establishment/modification request, it does not need to carry information related to the sensing service to be carried out, instead, the PCF directly delivers the QoS information corresponding to each classification (different classifications corresponding to different sensing parameter information), and then, the UE performs mapping according to the determined sensing service. This method may simultaneously support the determination of QoS of multiple sensing service types, thereby reducing the number of signaling interactions.

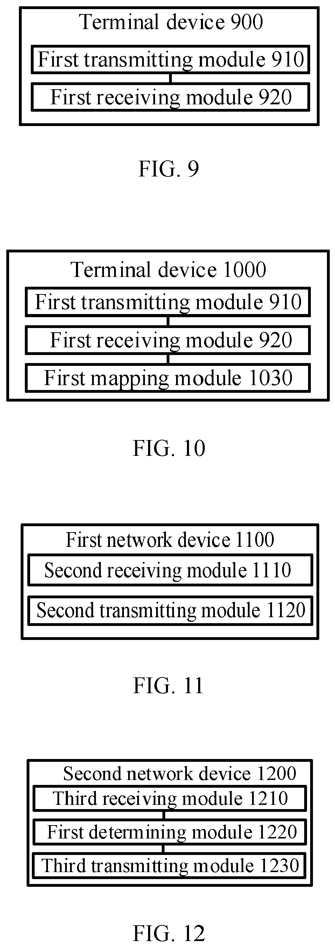

The embodiments of the present disclosure also propose a terminal device, and FIG. 9 is a schematic block diagram of a terminal device 900 according to an embodiment of the present disclosure. The terminal device 900 may include:
a first transmitting module 910 is configured to transmit a first message, where the first message carries sensing parameter information; and
a first receiving module 920 is configured to receive QoS information corresponding to the sensing parameter information.

In some implementations, the sensing parameter information includes at least one of a sensing type, a sensing scenario, a sensing service level, and a sensing area.

In some implementations, the first message includes a session establishment request or a session modification request.

In some implementations, the first message carrying sensing parameter information, includes:
the first message carrying identification information corresponding to a sensing service data flow and the sensing parameter information; or
the first message carrying identification information corresponding to a sensing service data flow, and the identification information corresponding to the sensing service data flow including the sensing parameter information.

FIG. 10 is a schematic block diagram of a terminal device 1000 according to an embodiment of the present disclosure. As shown in FIG. 10, the terminal device 1000 includes a first transmitting module 910, a first receiving module 920, and further includes:
a first mapping module 1030, configured to perform data packet mapping based on the QoS information corresponding to the sensing parameter information.

The terminal device 900 and the terminal device 1000 in the embodiments of the present disclosure can implement the corresponding functions of the terminal device in the aforementioned method embodiments. The procedure, function, implementation and beneficial effects corresponding to each module (e.g., sub-module, unit or component, etc.) in the terminal device 900 and the terminal device 1000 may refer to the corresponding description in the above method embodiments and will not be repeated here. It should be noted that the functions described with respect to the various modules (e.g., sub-modules, units or components, etc.) in the terminal device 900 and the terminal device 1000 in the embodiments of the present disclosure may be implemented by different modules (e.g., sub-modules, units or components, etc.) or implemented by a same module (e.g., sub-module, unit or component, etc.).

The embodiments of the present disclosure further provide a first network device, and FIG. 11 is a schematic block diagram of a first network device 1100 according to an embodiment of the present disclosure. The first network device 1100 may include:
a second receiving module 1110, configured to receive a first message from a terminal device, where the first message carries sensing parameter information; and
a second transmitting module 1120, configured to transmit a second message to a second network device, where the second message carries the sensing parameter information.

In some implementations, the second receiving module 1110 is further configured to receive a third message from the second network device, where the third message carries QoS information corresponding to the sensing parameter information; and
the second transmitting module 1120 is further configured to transmit the QoS information corresponding to the sensing parameter information to the terminal device.

In some implementations, the sensing parameter information includes at least one of a sensing type, a sensing scenario, a sensing service level, and a sensing area.

In some implementations, the first message includes a session establishment request or a session modification request.

In some implementations, the first message carrying the sensing parameter information, includes:
the first message carrying identification information corresponding to a sensing service data flow and the sensing parameter information; or
the first message carrying identification information corresponding to a sensing service data flow, and the identification information corresponding to the sensing service data flow including the sensing parameter information.

In some implementations, the second message includes a policy request message.

In some implementations, the second message carrying the sensing parameter information, includes:
the second message carrying identification information corresponding to a sensing service data flow and the sensing parameter information; or
the second message carrying identification information corresponding to a sensing service data flow, and the identification information corresponding to the sensing service data flow including the sensing parameter information.

In some implementations, the first network device includes an SMF.

In some implementations, the second network device includes a PCF.

The first network device 1100 in the embodiments of the present disclosure can implement the corresponding functions of the first network device in the aforementioned method embodiments. The procedure, function, implementation and beneficial effects corresponding to each module (e.g., sub-module, unit or component, etc.) in the first network device 1100 may refer to the corresponding description in the above method embodiments and will not be repeated here. It should be noted that the functions described with respect to the various modules (e.g., sub-modules, units or components, etc.) in the first network device 1100 in the embodiments of the present disclosure may be implemented by different modules (e.g., sub-modules, units or components, etc.) or implemented by a same module (e.g., sub-module, unit or component, etc.).

The embodiments of the present disclosure further propose a second network device 1200, and FIG. 12 is a schematic block diagram of a second network device 1200 according to an embodiment of the present disclosure. The second network device 1200 may include:
a third receiving module 1210, configured to receive a second message, where the second message carries sensing parameter information;
a first determining module 1220, configured for the second network device to determine QoS information corresponding to the sensing parameter information, according to the parameter information and a mapping relationship between the sensing parameter information and the QoS information; and
a third transmitting module 1230, configured to transmit a third message, where the third message carries the QoS information corresponding to the sensing parameter information.

In some implementations, the first determining module 1220 stores the mapping relationship between the sensing parameter information and the QoS information.

In some implementations, the sensing parameter information includes at least one of a sensing type, a sensing scenario, a sensing service level, and a sensing area.

In some implementations, the second message includes a policy request message.

In some implementations, the second message carrying the sensing parameter information, includes:
the second message carrying identification information corresponding to a sensing service data flow and the sensing parameter information; or
the second message carrying identification information corresponding to a sensing service data flow, and the identification information corresponding to the sensing service data flow including the sensing parameter information.

In some implementations, the third message includes a policy request response.

In some implementations, the policy request response carries a PCC rule, and the PCC rule includes the QoS information corresponding to the sensing parameter information.

In some implementations, the PCC rule including the QoS information corresponding to the sensing parameter information, includes:
the PCC rule including identification information corresponding to a sensing service data flow and the QoS information corresponding to the sensing parameter information; or
the PCC rule including identification information corresponding to a sensing service data flow and corresponding QoS information, and the identification information corresponding to the sensing service data flow including the sensing parameter information.

In some implementations, the second network device includes a PCF.

The second network device 1200 in the embodiments of the present disclosure can implement the corresponding functions of the second network device in the aforementioned method embodiments. The procedure, function, implementation and beneficial effects corresponding to each module (e.g., sub-module, unit or component, etc.) in the second network device 1200 may refer to the corresponding description in the above method embodiments and will not be repeated here. It should be noted that the functions described with respect to the various modules (e.g., sub-modules, units or components, etc.) in the second network device 1200 in the embodiments of the present disclosure may be implemented by different modules (e.g., sub-modules, units or components, etc.) or implemented by a same module (e.g., sub-module, unit or component, etc.).

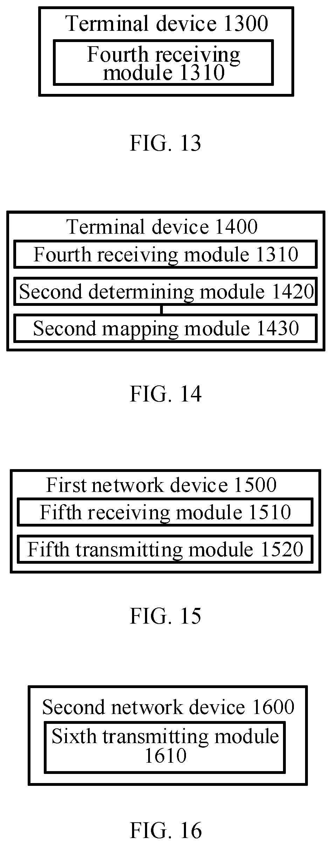

The embodiments of the present disclosure further propose a terminal device 1300, and FIG. 13 is a schematic block diagram of a terminal device 1300 according to an embodiment of the present disclosure. The terminal device 1300 may include:
a fourth receiving module 1310, configured to receive a fourth message, where the fourth message carries QoS information corresponding to each sensing parameter information of one or more sensing parameter information.

The embodiments of the present disclosure further propose a terminal device 1400, and FIG. 14 is a schematic block diagram of a terminal device 1400 according to an embodiment of the present disclosure. The terminal device 1400 includes a fourth receiving module 1310 and further includes:
a second determining module 1420, configured to determine QoS information corresponding to sensing parameter information according to the sensing parameter information of a sensing service; and
a second mapping module 1430, configured to perform data packet mapping based on the QoS information corresponding to the sensing parameter information.

In some implementations, the sensing parameter information includes at least one of: a sensing type, a sensing scenario, a sensing service level, and a sensing area.

In some implementations, the fourth message includes a session establishment response or a session modification response.

In some implementations, the fourth message carrying the QoS information corresponding to each sensing parameter information of the one or more sensing parameter information, includes:
the fourth message carrying identification information corresponding to a sensing service data flow and the sensing parameter information, and corresponding QoS information; or
the fourth message carrying identification information corresponding to a sensing service data flow and corresponding QoS information, and the identification information corresponding to the sensing service data flow including the sensing parameter information.

The terminal device 1300 and the terminal device 1400 in the embodiments of the present disclosure can implement the corresponding functions of the terminal device in the aforementioned method embodiments. The procedure, function, implementation and beneficial effects corresponding to each module (e.g., sub-module, unit or component, etc.) in the terminal device 1300 and the terminal device 1400 may refer to the corresponding description in the above method embodiments and will not be repeated here. It should be noted that the functions described with respect to the various modules (e.g., sub-modules, units or components, etc.) in the network device 500 in the embodiments of the present disclosure may be implemented by different modules (e.g., sub-modules, units or components, etc.) or implemented by a same module (e.g., sub-module, unit or component, etc.).

The embodiments of the present disclosure further provide a first network device 1500, and FIG. 15 is a schematic block diagram of a first network device 1500 according to an embodiment of the present disclosure. The first network device 1500 includes:
a fifth receiving module 1510, configured to receive a fifth message from a second network device, where the fifth message carries QoS information corresponding to each sensing parameter information of one or more sensing parameter information; and
a fifth transmitting module 1520, configured to transmit a fourth message to a terminal device, where the fourth message carries the QoS information corresponding to each sensing parameter information of the one or more sensing parameter information.

In some implementations, the sensing parameter information includes at least one of: a sensing type, a sensing scenario, a sensing service level, and a sensing area.

In some implementations, the fifth message includes a policy request response.

In some implementations, the fourth message includes a session establishment response or a session modification response.

In some implementations, the fourth message carrying identification information corresponding to a sensing service data flow and the one or more sensing parameter information, and the QoS information corresponding to the each sensing parameter information; or
the fourth message carrying identification information corresponding to a sensing service data flow and the QoS information corresponding to the each sensing parameter information, and the identification information corresponding to the sensing service data flow including the one or more sensing parameter information.

In some implementations, the first network device includes an SMF.

In some implementations, the second network device includes a PCF.

The first network device 1500 in the embodiments of the present disclosure can implement the corresponding functions of the network device in the aforementioned method embodiments. The procedure, function, implementation and beneficial effects corresponding to each module (e.g., sub-module, unit or component, etc.) in the first network device 1500 may refer to the corresponding description in the above method embodiments and will not be repeated here. It should be noted that the functions described with respect to the various modules (e.g., sub-modules, units or components, etc.) in the first network device 1500 in the embodiments of the present disclosure may be implemented by different modules (e.g., sub-modules, units or components, etc.) or implemented by a same module (e.g., sub-module, unit or component, etc.).

The embodiments of the present disclosure further propose a second network device 1600, and FIG. 16 is a schematic block diagram of a second network device 1600 according to an embodiment of the present disclosure. The second network device 1600 may include:
a sixth transmitting module 1610, configured to transmit a fifth message, where the fifth message carries QoS information corresponding to each sensing parameter information of one or more sensing parameter information.

In some implementations, the second network device stores a mapping relationship between the one or more sensing parameter information and QoS information.

In some implementations, the sensing parameter information includes at least one of: a sensing type, a sensing scenario, a sensing service level, and a sensing area.

In some implementations, the fifth message includes a policy request response.

In some implementations, the fifth message carrying identification information corresponding to a sensing service data flow and one or more PCC rules, where the PCC rule including identification information corresponding to a sensing service data flow, the sensing parameter information and corresponding QoS information; or, the PCC rule including identification information corresponding to a sensing service data flow and corresponding QoS information, and the identification information corresponding to the sensing service data flow including the sensing parameter information.

In some implementations, the second network device includes a PCF.

The second network device 1600 in the embodiments of the present disclosure can implement the corresponding functions of the second network device in the aforementioned method embodiments. The procedure, function, implementation and beneficial effects corresponding to each module (e.g., sub-module, unit or component, etc.) in the second network device 1600 may refer to the corresponding description in the above method embodiments and will not be repeated here. It should be noted that the functions described with respect to the various modules (e.g., sub-modules, units or components, etc.) in the second network device 1600 in the embodiments of the present disclosure may be implemented by different modules (e.g., sub-modules, units or components, etc.) or implemented by a same module (e.g., sub-module, unit or component, etc.).

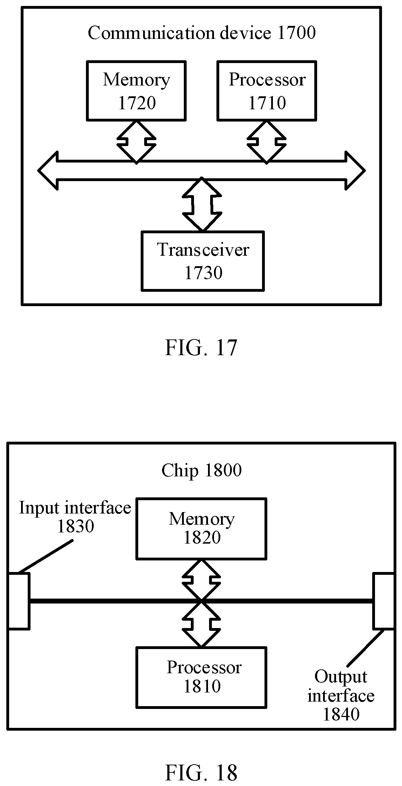

FIG. 17 is a schematic structural diagram of a communication device 1700 according to the embodiments of the present disclosure. The communication device 1700 includes a processor 1710, and the processor 1710 invokes a computer program from a memory and runs the computer program, to enable the communication device 1700 to implement the method in the embodiments of the present disclosure.

In an implementation, the communication device 1700 may further include a memory 1720. The processor 1710 may invoke a computer program from the memory 1720 and run the computer program, to enable the communication device 1700 to implement the method in the embodiments of the present disclosure.

The memory 1720 may be a separate device independent of the processor 1710, or may be integrated into the processor 1710.

In an implementation, the communication device 1700 may further include a transceiver 1730, and the processor 1710 may control the transceiver 1730 to communicate with other devices, and specifically, to be capable of transmitting information or data to other devices, or receiving information or data transmitted from other devices.

The transceiver 1730 may include a transmitter and a receiver. The transceiver 1730 may further include an antenna, and the number of antennas may be one or more.

In an implementation, the communication device 1700 may be a terminal device in the embodiments of the present disclosure, and the communication device 1700 may implement the corresponding procedures implemented by the terminal device in each method of the embodiments of the present disclosure, which will not be repeated here for the sake of brevity.

In an implementation, the communication device 1700 may be the first network device in the embodiments of the present disclosure, and the communication device 1700 may implement the corresponding procedures implemented by the first network device in each method of the embodiments of the present disclosure, which will not be repeated here for the sake of brevity.

In an implementation, the communication device 1700 may be the second network device in the embodiments of the present disclosure, and the communication device 1700 may implement the corresponding procedures implemented by the second network device in each method of the embodiments of the present disclosure, which will not be repeated here for the sake of brevity.

FIG. 18 is a schematic structural diagram of a chip 1800 according to the embodiments of the present disclosure. The chip 1800 includes a processor 1810, and the processor 1810 may invoke a computer program from a memory and run the computer program, to implement the method in the embodiments of the present disclosure.

In an implementation, the chip 1800 may further include a memory 1820. The processor 1810 may invoke a computer program from the memory 1820 and run the computer program, to implement the method performed by the terminal device or the network device in the embodiments of the present disclosure.

The memory 1820 may be a separate device independent of the processor 1810, or may be integrated into the processor 1810.

In an implementation, the chip 1800 may further include an input interface 1830. The processor 1810 may control the input interface 1830 to communicate with other devices or chips, and specifically, to acquire information or data transmitted by other devices or chips.

In an implementation, the chip 1800 may further include an output interface 1840. The processor 1810 may control the output interface 1840 to communicate with other devices or chips, and specifically, to output information or data to other devices or chips.

In an implementation, the chip may be applied to the terminal device in the embodiments of the present disclosure, and the chip may implement the corresponding procedures implemented by the terminal device in each method of the embodiments of the present disclosure, which will not be repeated here for the sake of brevity.

In an implementation, the chip may be applied to the first network device in the embodiments of the present disclosure, and the chip may implement the corresponding procedures implemented by the network device in each method of the embodiments of the present disclosure, which will not be repeated here for the sake of brevity.

In an implementation, the chip may be applied to the second network device in the embodiments of the present disclosure, and the chip may implement the corresponding procedures implemented by the network device in each method of the embodiments of the present disclosure, which will not be repeated here for the sake of brevity.

The chips applied in the network devices and the terminal device may be the same chip or different chips.

It should be understood that the chip mentioned in the embodiments of the present disclosure may also be called a system on chip, a system chip, a chip system or a system-on-chip chip, etc.

The above-mentioned processor may be a general-purpose processor, a digital signal processor (DSP), a field programmable gate array (FPGA), an application specific integrated circuit (ASIC) or other programmable logic devices, transistor logic devices, and discrete hardware components, etc. The above-mentioned general-purpose processor may be a microprocessor or may be any conventional processor, etc.

The above-mentioned memory may be a volatile memory or a non-volatile memory, or may include both the volatile memory and non-volatile memory. The non-volatile memory may be a read-only memory (ROM), a programmable read-only memory (programmable ROM, PROM), an erasable programmable read-only memory (erasable PROM, EPROM), an electrically erasable programmable read-only memory (electrically EPROM, EEPROM) or a flash memory. The volatile memory may be a random access memory (RAM).

It should be understood that the above-mentioned memory is exemplary but not a limited illustration. For example, the memory in the embodiments of the present disclosure may also be a static random access memory (static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchronous link dynamic random access memory (Synchlink DRAM, SLDRAM) and a direct rambus random access memory (Direct Rambus RAM, DR RAM). It should be noted that the memory of the system and the method described herein is intended to include, but not limited to, these and any other suitable types of memories.

The above embodiments may be implemented in whole or in part by software, hardware, firmware, or any combination thereof. When the above embodiments are implemented by using software, they may be implemented in the form of a computer program product in whole or in part. The computer program product includes one or more computer instructions. When computer program instructions are loaded and executed on a computer, processes or functions according to the embodiments of the present disclosure are generated in whole or in part. The computer may be a general-purpose computer, a dedicated computer, a computer network, or any other programmable apparatus. The computer instructions may be stored in a computer-readable storage medium or transmitted from one computer-readable storage medium to another computer-readable storage medium, for example, the computer instructions may be transmitted from a website site, computer, server, or data center to another website site, computer, server, or data center via wired (such as coaxial cable, fiber optic, digital subscriber line (DSL)) or wireless (such as infrared, radio, microwave, etc.) means. The computer-readable storage medium may be any available medium that can be accessed by the computer, or a data storage device, such as including a server or a data center that integrates one or more available media. The available medium may be a magnetic medium (e.g., a floppy disk, a hard disk or a magnetic tape), an optical medium (e.g., a digital video disk (DVD)) or a semiconductor medium (e.g., a solid state disk (SSD)), etc.

It should be understood that, in the various embodiments of the present disclosure, a size of serial numbers of the above processes does not imply an order of execution, and the execution order of the respective processes should be determined by their function and internal logic, but should not constitute any limitation on the implementation processes of the embodiments of the present disclosure.

Those skilled in the art may clearly understand that, for the convenience and brevity of the description, the specific working processes of the systems, apparatus and units described above may refer to the corresponding processes in the above method embodiments, which will not be repeated here.

The above description is only the specific implementation of the present disclosure, but the protection scope of the present disclosure is not limited thereto, and any skilled familiar with this technical field may easily think of changes or substitutions within the technical scope disclosed in the present disclosure, which should be all covered within the protection scope of the present disclosure. Therefore, the protection scope of the present disclosure should be determined based on the protection scope of claims.

## Claims

1. A method for determining quality of service (QoS) of a sensing task, comprising:
transmitting, by a terminal device, a first message, wherein the first message carries sensing parameter information; and
receiving, by the terminal device, QoS information corresponding to the sensing parameter information.

2. The method according to claim 1, wherein the sensing parameter information comprises at least one of: a sensing type, a sensing scenario, a sensing service level, and a sensing area.

3. The method according to claim 1 or 2, wherein the first message comprises a session establishment request or a session modification request.

4. The method according to any one of claims 1 to 3, wherein the first message carrying sensing parameter information, comprises:
the first message carrying identification information corresponding to a sensing service data flow and the sensing parameter information; or
the first message carrying identification information corresponding to a sensing service data flow, and the identification information corresponding to the sensing service data flow comprising the sensing parameter information.

5. The method according to any one of claims 1 to 4, further comprises:
performing, by the terminal device, data packet mapping based on the QoS information corresponding to the sensing parameter information.

6. A method for determining quality of service (QoS) of a sensing task, comprising:
receiving, by a first network device, a first message from a terminal device, wherein the first message carries sensing parameter information; and
transmitting, by the first network device, a second message to a second network device, wherein the second message carries the sensing parameter information.

7. The method according to claim 6, further comprising:
receiving, by the first network device, a third message from the second network device, wherein the third message carries QoS information corresponding to the sensing parameter information; and
transmitting, by the first network device, the QoS information corresponding to the sensing parameter information to the terminal device.

8. The method according to claim 6 or 7, wherein the sensing parameter information comprises at least one of: a sensing type, a sensing scenario, a sensing service level, and a sensing area.

9. The method according to any one of claims 6 to 8, wherein the first message comprises a session establishment request or a session modification request.

10. The method according to any one of claims 6 to 9, wherein the first message carrying the sensing parameter information, comprises:
the first message carrying identification information corresponding to a sensing service data flow and the sensing parameter information; or
the first message carrying identification information corresponding to a sensing service data flow, and the identification information corresponding to the sensing service data flow comprising the sensing parameter information.

11. The method according to any one of claims 6 to 10, wherein the second message comprises a policy request message.

12. The method according to any one of claims 6 to 11, wherein the second message carrying the sensing parameter information, comprises:
the second message carrying identification information corresponding to a sensing service data flow and the sensing parameter information; or
the second message carrying identification information corresponding to a sensing service data flow, and the identification information corresponding to the sensing service data flow comprising the sensing parameter information.

13. The method according to any one of claims 6 to 12, wherein the first network device comprises a session management function (SMF).

14. The method according to any one of claims 6 to 12, wherein the second network device comprises a policy control function (PCF).

15. A method for determining quality of service (QoS) of a sensing task, comprising:
receiving, by a second network device, a second message, wherein the second message carries sensing parameter information;
determining, by the second network device, QoS information corresponding to the sensing parameter information, according to the parameter information and a mapping relationship between the sensing parameter information and the QoS information; and
transmitting, by the second network device, a third message, wherein the third message carries the QoS information corresponding to the sensing parameter information.

16. The method according to claim 15, further comprising: storing, by the second network device, the mapping relationship between the sensing parameter information and the QoS information.

17. The method according to claim 15 or 16, wherein the sensing parameter information comprises at least one of: a sensing type, a sensing scenario, a sensing service level, and a sensing area.

18. The method according to any one of claims 15 to 17, wherein the second message comprises a policy request message.

19. The method according to any one of claims 15 to 18, wherein the second message carrying the sensing parameter information, comprises:
the second message carrying identification information corresponding to a sensing service data flow and the sensing parameter information; or
the second message carrying identification information corresponding to a sensing service data flow, and the identification information corresponding to the sensing service data flow comprising the sensing parameter information.

20. The method according to any one of claims 15 to 19, wherein the third message comprises a policy request response.

21. The method according to claim 20, wherein the policy request response carries a policy and charging control (PCC) rule, and the PCC rule comprises the QoS information corresponding to the sensing parameter information.

22. The method according to claim 21, wherein the PCC rule comprising the QoS information corresponding to the sensing parameter information, comprises:
the PCC rule comprising identification information corresponding to a sensing service data flow and the QoS information corresponding to the sensing parameter information; or
the PCC rule comprising identification information corresponding to a sensing service data flow and corresponding QoS information, and the identification information corresponding to the sensing service data flow comprising the sensing parameter information.

23. The method according to any one of claims 15 to 22, wherein the second network device comprises a policy control function (PCF).

24. A method for determining quality of service (QoS) of a sensing task, comprising:
receiving, by a terminal device, a fourth message, wherein the fourth message carries QoS information corresponding to each sensing parameter information of one or more sensing parameter information.

25. The method according to claim 24, further comprising,
determining, by the terminal device, QoS information corresponding to sensing parameter information according to the sensing parameter information of a sensing service;
performing, by the terminal device, data packet mapping based on the QoS information corresponding to the sensing parameter information.

26. The method according to claim 24 or 25, wherein the sensing parameter information comprises at least one of: a sensing type, a sensing scenario, a sensing service level, and a sensing area.

27. The method according to any one of claims 24 to 26, wherein the fourth message comprises a session establishment response or a session modification response.

28. The method according to any one of claims 24 to 27, wherein the fourth message carrying the QoS information corresponding to each sensing parameter information of the one or more sensing parameter information, comprises:
the fourth message carrying identification information corresponding to a sensing service data flow and the sensing parameter information, and corresponding QoS information; or
the fourth message carrying identification information corresponding to a sensing service data flow and corresponding QoS information, and the identification information corresponding to the sensing service data flow comprising the sensing parameter information.

29. A method for determining quality of service (QoS) of a sensing task, comprising:
receiving, by a first network device, a fifth message from a second network device, wherein the fifth message carries QoS information corresponding to each sensing parameter information of one or more sensing parameter information; and
transmitting, by the first network device, a fourth message to a terminal device, wherein the fourth message carries the QoS information corresponding to each sensing parameter information of the one or more sensing parameter information.

30. The method according to claim 29, wherein the sensing parameter information comprises at least one of: a sensing type, a sensing scenario, a sensing service level, and a sensing area.

31. The method according to claim 29 or 30, wherein the fifth message comprises a policy request response.

32. The method according to any one of claims 29 to 31, wherein the fourth message comprises a session establishment response or a session modification response.

33. The method according to any one of claims 29 to 32, wherein the fourth message carrying the QoS information corresponding to each sensing parameter information of the one or more sensing parameter information, comprises:
the fourth message carrying identification information corresponding to a sensing service data flow and the one or more sensing parameter information, and the QoS information corresponding to the each sensing parameter information; or
the fourth message carrying identification information corresponding to a sensing service data flow and the QoS information corresponding to the each sensing parameter information, and the identification information corresponding to the sensing service data flow comprising the one or more sensing parameter information.

34. The method according to any one of claims 29 to 33, wherein the first network device comprises a session management function (SMF).

35. The method according to any one of claims 29 to 33, wherein the second network device comprises a policy control function (PCF).

36. A method for determining quality of service (QoS) of a sensing task, comprising:
transmitting, by a second network device, a fifth message, wherein the fifth message carries QoS information corresponding to each sensing parameter information of one or more sensing parameter information.

37. The method according to claim 36, further comprising: storing, by the second network device, a mapping relationship between the one or more sensing parameter information and QoS information.

38. The method according to claim 36 or 37, wherein the sensing parameter information comprises at least one of: a sensing type, a sensing scenario, a sensing service level, and a sensing area.

39. The method according to any one of claims 36 to 38, wherein the fifth message comprises a policy request response.

40. The method according to any one of claims 36 to 39, wherein the fifth message carrying the QoS information corresponding to each sensing parameter information of the one or more sensing parameter information, comprises:
the fifth message carrying identification information corresponding to a sensing service data flow and one or more policy and charging control (PCC) rules; and
a PCC rule comprising identification information corresponding to a sensing service data flow, the sensing parameter information and corresponding QoS information; or, a PCC rule comprising identification information corresponding to a sensing service data flow and corresponding QoS information, and the identification information corresponding to the sensing service data flow comprising the sensing parameter information.

41. The method according to any one of claims 36 to 40, wherein the second network device comprises a policy control function (PCF).

42. A terminal device, comprising:
a first transmitting module, configured to transmit a first message, wherein the first message carries sensing parameter information; and
a first receiving module, configured to receive QoS information corresponding to the sensing parameter information.

43. A first network device, comprising:
a second receiving module, configured to receive a first message from a terminal device, wherein the first message carries sensing parameter information; and
a second transmitting module, configured to transmit a second message to a second network device, wherein the second message carries the sensing parameter information.

44. A second network device, comprising:
a third receiving module, configured to receive a second message, wherein the second message carries sensing parameter information;
a first determining module, configured to determine QoS information corresponding to the sensing parameter information, according to the parameter information and a mapping relationship between the sensing parameter information and the QoS information; and
a third transmitting module, configured to transmit a third message, wherein the third message carries the QoS information corresponding to the sensing parameter information.

45. A terminal device, comprising:
a fourth receiving module, configured to receive a fourth message, wherein the fourth message carries QoS information corresponding to each sensing parameter information of one or more sensing parameter information.

46. A first network device, comprising:
a fifth receiving module, configured to receive a fifth message from a second network device, wherein the fifth message carries QoS information corresponding to each sensing parameter information of one or more sensing parameter information; and
a fifth transmitting module, configured to transmit a fourth message to a terminal device, wherein the fourth message carries the QoS information corresponding to each sensing parameter information of the one or more sensing parameter information.

47. A second network device, comprising:
a sixth transmitting module, configured to transmit a fifth message, wherein the fifth message carries QoS information corresponding to each sensing parameter information of one or more sensing parameter information.

48. A communication device, comprising: a processor, a memory and a transceiver, wherein the memory is configured to store a computer program, and the processor is configured to invoke and run the computer program stored in the memory, and control the transceiver, to perform the method according to any one of claims 1 to 5, 6 to 14, 15 to 23, 24 to 28, 29 to 35, or 36 to 41.

49. A chip, comprising: a processor, configured to invoke a computer program from a memory and run the computer program, to cause a device equipped with the chip to perform the method according to any one of claims 1 to 5, 6 to 14, 15 to 23, 24 to 28, 29 to 35, or 36 to 41.

50. A computer-readable storage medium, configured to store a computer program, wherein the computer program, when executed by a device, causes the device to perform the method according to any one of claims 1 to 5, 6 to 14, 15 to 23, 24 to 28, 29 to 35, or 36 to 41.

51. A computer program product, comprising computer program instructions, wherein the computer program instructions cause a computer to perform the method according to any one of claims 1 to 5, 6 to 14, 15 to 23, 24 to 28, 29 to 35, or 36 to 41.

52. A computer program, wherein the computer program causes a computer to perform the method according to any one of claims 1 to 5, 6 to 14, 15 to 23, 24 to 28, 29 to 35, or 36 to 41.
